# EUROPEAN PATENT APPLICATION

(11) **EP 1 811 214 A1**
(43) Date of publication of application: **25.07.2007**
(21) Application number: 06425023.6
(22) Date of filing: 20.01.2006
(51) Int. Cl.: F16K 11/02, A47J 31/46

(54) **Diverting valve assembly for drink vending machines**

(71) Applicant: Pres-Block S.P.A., 10040 Caselette (IT)
(72) Inventor: Nicolino, Aldo, 10040 Caselette (IT)
(74) Representative: Cerbaro, Elena

(57) **Abstract**

In a selecting valve assembly (1) for drink vending machines, an incoming fluid from an inlet (7) is conveyed either to a main outlet (8) or to a secondary outlet (10) through a single selecting body (13) of elastically deformable material presenting a first (16) and a second (17) elastically deformable shut-off portions of the incoming fluid, associated to the main outlet (8) and to the secondary outlet (10), respectively.

## Description

The present invention relates to a selecting valve assembly for drink vending machines, in particular for coffee machines.

In coffee machines, it is known to use three-way selecting valve assemblies for conveying hot water from the tank to a main outlet when the hot water itself is fed at a pressure higher than a predetermined threshold value and to a secondary or bypass conduit when the hot water pressure is lower than the mentioned threshold value.

The selecting valve assemblies normally envisaged on known coffee machines generally comprise a first normally closed shut-off valve associated to the main outlet and adapted to allow the flow of water to the main outlet itself when the pressure exceeds the mentioned threshold value, and a normally open second valve associated to the secondary bypass outlet for inhibiting the flow of water through the secondary outlet when the pressure exceeds the mentioned threshold value.

Even if universally used because they are reliable and efficient, the known valve assemblies described above have the main drawback of being relatively complex and costly and of requiring long assembly times. The above is essentially due to the presence of two reciprocally separate and independent shut-off valves and to the high number of components to be assembled.

It is an object of the present invention to provide a selecting valve assembly which allows to simply and cost-effectively solve the problems set forth above and which at the same time is simple and cost-effective to manufacture, highly efficient and functionally reliable.

According to the present invention, there is provided a selecting valve assembly for drink vending machines, the assembly comprising a fluid inlet, a main outlet, a secondary outlet, and selecting valve means for conveying the incoming fluid to the main outlet when the pressure of the incoming fluid exceeds a predetermined threshold value and towards the secondary outlet when the incoming fluid pressure is lower than said threshold value; characterised in that said selecting valve means comprise a single selecting body comprising a first and a second elastically deformable shut-off portions associated to the main outlet and to the secondary outlet, respectively.

Preferably in the valve assembly described above, said selecting body is made of a single part of elastically deformable material, and conveniently, said first and second shut-off portions extend in essentially reciprocally orthogonal directions.

The present invention also relates to a selecting body for a valve assembly of a drink vending machine.

According to the present invention, there is provided a selecting body, for a valve assembly of a drink vending machine, comprising a fluid inlet, a main outlet, and a secondary outlet for said fluid, characterised in that it comprises a first and a second elastically deformable shut-off portions of said fluid associated to the main outlet and to the secondary outlet, respectively.

The invention will now be described with reference to the accompanying drawings illustrating, by way of example, a non-limitative embodiment thereof, in which:
- figure 1 shows in section a preferred embodiment of a selecting valve assembly for drink vending machines, in particular coffee machines, made according to the dictates of the present invention;
- figure 2 is a section taken along line II-II in figure 1;
- figure 3 is a section taken along line III-III in figure 1; and
- figures 4 and 5 are two different perspective views on reduced scale of a preferred embodiment of a selecting body according to the present invention.

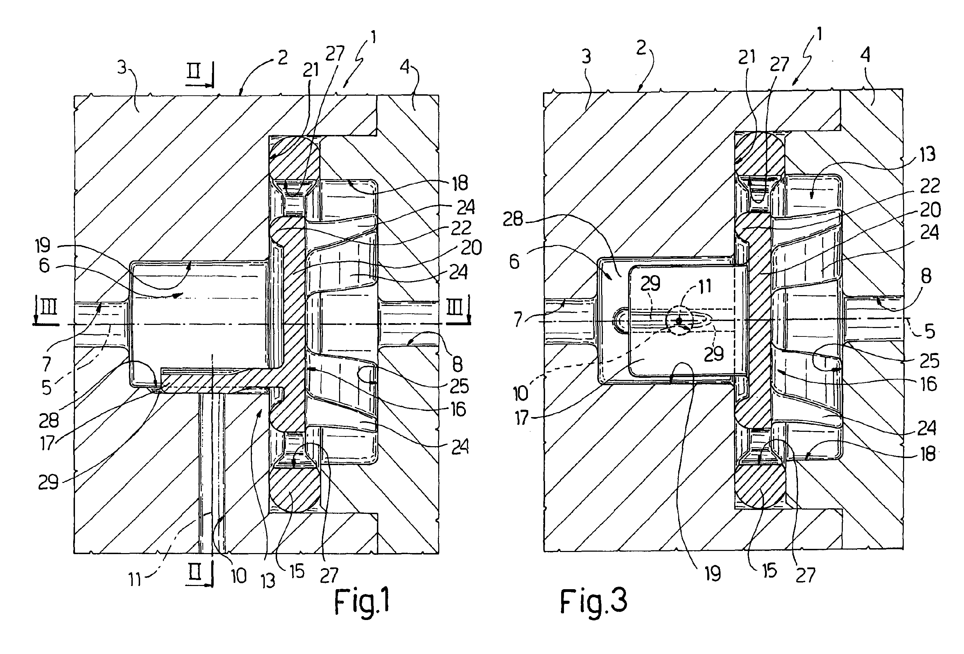

In figures 1 and 3, it is indicated by numeral 1 a three-way selection valve assembly for a drink vending machine, in particular a coffee machine, known per se and therefore not shown.

The valve assembly 1 comprises a fixed external casing 2, in turn comprising two hollow bodies indicated with 3 and 4, which are aligned and coaxial to an axis 5, partially inserted one inside the other and delimiting a cavity 6 therebetween. The cavity 6 communicates with an inlet conduit 7 of a pressurised fluid, in the specific case hot water, made coaxially with the axis 5 through the body 3, and with a main outlet conduit 8 made again coaxially to the axis 5 through the body 4 for conveying the incoming hot water through the cavity 6, for example towards a wafer (not shown) containing the substance to be used for preparing the beverage, in the specific case coffee. The cavity 6 further communicates with a secondary outlet or bypass conduit 10 which extends through the body 3 coaxially to an axis orthogonal to axis 5 to convey the incoming fluid to a tank not shown.

The selective connection of the inlet conduit 7 with either of the outlet conduits is obtained by means of a selecting body 13, which constitutes part of the valve assembly 1 and is accommodated in cavity 6 with its axis of symmetry coinciding with axis 5. The selecting body 13 is made as a single part of elastically deformable material, conventionally silicone or peroxide EPDM, and comprises an annular anchoring and sealing portion 15 forced between the two bodies 3 and 4 to hold the selecting body 13 in a fixed reference position, and two shut-off portions, indicated with numbers 16 and 17 and associated to the main outlet conduit 8 and to the secondary outlet conduit 10, respectively.

The portion 16 is a disk portion extending coaxially and orthogonally to the axis 5 inside the annular portion 15 and divides the cavity 6 into two chambers, indicated with 18 and 19 and to which the main conduit 8 and, respectively, the inlet conduit 7 and secondary outlet conduit 10 lead. The shut-off portion 16 presents an essentially plate-shaped central part 20 from which axially protrudes towards a bottom surface 21 of the body 3 an annular protrusion 22 coaxially with the axis 5 and abutly cooperating, in use, against the surface 21 itself to isolate the chamber 18 and therefore the conduit 8 from the chamber 19. The ridge 22 is pushed against the surface 21 by a crown of equally spaced appendixes or fins 24, which extend into the chamber 18 in position opposite to the shut-off portion 17 and are elastically deformed between the plate-shaped part 20 and a bottom surface 25 of the body 4 facing the surface 21 itself and delimiting the chamber 18.

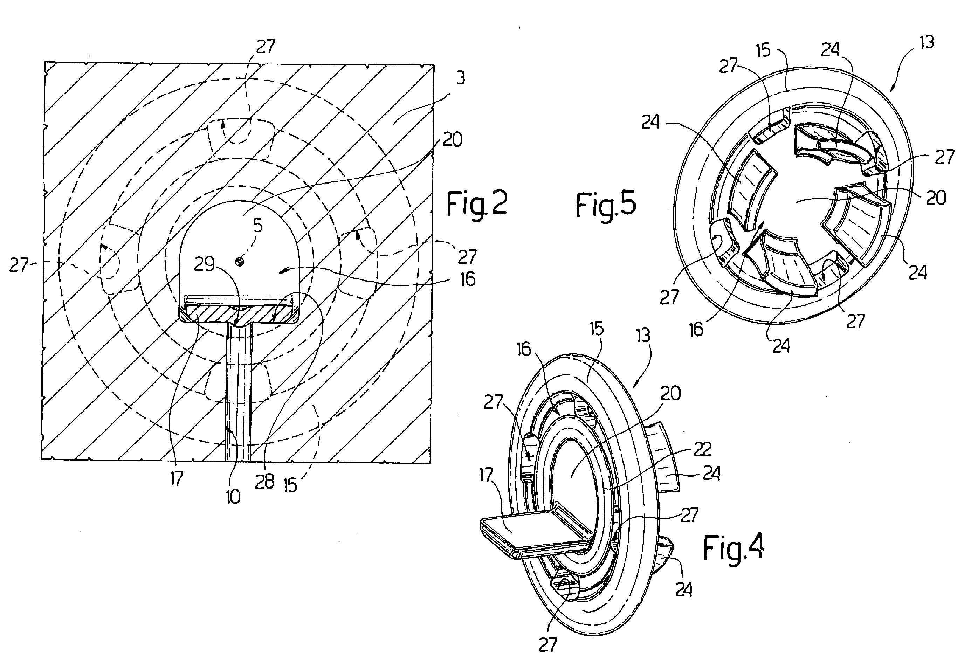

A crown of openings or through holes 27 intercalated between the fins 24 so that each through hole results between two consecutive fins 24, as shown in figure 5, is obtained in the zone of the shut-off portion 16 comprised between the annular ridge 22 and the annular anchoring portion 15.

Again with reference to figures from 1 to 4, the shut-off portion 17 extends from one zone of the portion 20 inside the ridge 22 to inside the chamber 19 in direction opposite to the fins 24 and parallel to the axis 5, the shut-off portion 17 being plate-shaped (figures 1 and 2) and arranged facing a flat resting surface 28 of the body 3 and an inlet of the secondary outlet conduit 10. A diametrical groove 29 is made on the surface 28. Such groove 29 crosses the conduit 10 and has an external end facing the portion 17 and an increasing depth from the edge to the conduit 10 itself.

In use, when the value of the fluid pressure let into the chamber 19 through the conduit 7 is maintained under a predetermined threshold value, normally in the order of 0.2-0.8 bars, the fins 24 hold the portion 16 in its shut-off position forcing the annular ridge 22 into contact with the surface 21 thus inhibiting the flow of fluid to the main conduit 8, as well as a possible return of fluid from the outlet conduit 8 to the chamber 19. In the same condition, the portion 17 remains in its undeformed position thus allowing the flow of fluid from the chamber 19 to the bypass conduit 10. This passage is facilitated by the presence of the groove 29.

When the fluid pressure in the chamber 19 exceeds the mentioned threshold value, the pressure in the chamber 19 elastically deforms the portion 17 forcing it against the surface 28 and thus isolating the chamber 19 from the conduit 10, and exerting an antagonising bias to the elastic bias exerted by the fins 24 which produce a further deformation of the fins 24 themselves and a consequent distancing of the annular ridge 22 from the surface 21 and the passage of fluid from the chamber 19 to the conduit 8 via the through-hole crown 27.

From the above it is apparent that the described valve assembly 1 is particularly simple from a construction and assembly point of view with respect to the known solutions. This is essentially due to the use of a selecting body made of a single part to deviate the incoming flow towards the main outlet or towards the bypass conduit. The particular constructive method of the selecting body 13 allows to make a high-efficiency, functionally reliable valve assembly. In particular, the presence of the variable depth groove 29 prevents, on one hand, also only partial sticking of the portion 17 onto the respective abutting surface 28 and improves, on the other hand, sealing by favouring the elastic deformation of the shut-off portion itself.

From the above it is apparent that changes and variations can be made to the described valve assembly 1 without departing from the scope of protection defined by the claims. In particular, the selecting body 13 may present a different geometry from that shown by way of example, being however again provided with a pair of reciprocally independent shut-off portions. Furthermore, the body 13 could be free from the appendixes 24 and other equivalent elastic biasing elements either connected to the body 13 or independent from the body 13 itself.

## Claims

1. A selecting valve assembly (1) for drink vending machines, the assembly (1) comprising a fluid inlet (7), a main outlet (8), a secondary outlet (10), and selecting valve means for conveying the incoming fluid to the main outlet (8) when the pressure of the incoming fluid exceeds a predetermined threshold value and towards the secondary outlet (10) when the incoming fluid pressure is lower than said threshold value; **characterised in that** said selecting valve means comprise a single selecting body (13) comprising a first (16) and a second (17) elastically deformable shut-off portions of said incoming fluid and associated to the main outlet (8) and to the secondary outlet (10), respectively.

2. An assembly according to claim 1, **characterised in that** said selecting body (13) is made of a single part of elastically deformable material.

3. An assembly according to claim 1 or 2, **characterised in that** said first (16) and second (17) shut-off portions extend in essentially reciprocally orthogonal directions.

4. An assembly according to any of the preceding claims, **characterised in that** it comprises a first (21) and a second (28) fixed abutting surfaces; said first (16) and second (17) shut-off portions facing the first (21) and said (28) second fixed surfaces, respectively, and being adapted to be forced against the respective fixed surface to inhibit the flow of fluid towards said respective outlets.

5. An assembly according to claim 4, **characterised in that** said second shut-off portion (17) is mobile under the bias of said fluid between an undeformed home position, in which it allows the flow of fluid through said secondary outlet (10), and a deformed position in which it fluid-tightly closes the secondary outlet.

6. An assembly according to claim 4 or 5, **characterised in that** it further comprises at least one radial groove (29) leading into said secondary outlet (10) and made on the surface of said second fixed surface (28) in position facing said second shut-off portion (17).

7. An assembly according to claim 6, **characterised in that** said radial groove (29) presents an increasing depth towards said secondary outlet.

8. An assembly according to any of the claims from 4 to 7, **characterised in that** it further comprises elastic biasing means (24) of said first shut-off portion (16) against said first fixed abutting surface (21); said incoming fluid exerting on said first shut-off portion (16) a force antagonising that exerted by said elastic biasing means (24).

9. An assembly according to claim 8, **characterised in that** said elastic biasing means comprise a plurality of elastically deformable appendixes (24) integral to said first shut-off portion (16) and supportingly arranged on a fixed locator surface (25) facing said first fixed abutting surface (21).

10. An assembly according to claim 8 or 9, **characterised in that** said first shut-off portion further comprises an annular ridge (22) forced by said elastic biasing means against the first fixed abutting surface (21), a peripheral anchoring edge (15) fixed with respect to said first abutting surface, and at least a through opening (27) for said fluid made between said annular ridge (22) and said peripheral anchoring edge (15).

11. An assembly according to claim 10, **characterised in that** it comprises an external casing (2) defining said fixed abutting and locating surfaces and delimiting a cavity (6) communicating with said inlet (7) and with said outlets (8)(10); said first shut-off portion (16) dividing said cavity into two chambers (18) (19) aligned along a longitudinal axis (5), one accommodating said second shut-off portion (17) and the other said biasing means.

12. An assembly according to claim 11, **characterised in that** said inlet (7) and said main outlet (8) coaxially extend to said longitudinal axis (5).

13. An assembly according to claim 11 or 12, **characterised in that** said external casing comprises two bodies (3) (4) squeezing together said peripheral anchoring edge (15).

14. A selecting body (13) for a valve assembly (1) of a drink vending machine comprising a fluid inlet, a main outlet and a secondary outlet for said fluid, **characterised in that** it comprises a first (16) and a second (17) elastically deformable shut-off portions of said fluid associated to the main outlet and to the secondary outlet, respectively.

15. A body according to claim 14, **characterised in that** it is made of a single part of elastically deformable material.

16. A body according to claim 14 or 15, **characterised in that** said first and second shut-off portions extend in essentially reciprocally orthogonal directions.

17. A body according to claim 16, **characterised in that** it comprises an axis of symmetry (5) and **in that** said second shut-off portion (17) extends parallelly to said axis (5) and the first shut-off portion (16) is a disk portion coaxial to said axis of symmetry.

18. A body according to claim 17, **characterised in that** it further comprises a plurality of elastically deformable appendixes (24) integral to said first shut-off portion (16) in opposite positions to said second shut-off portion (17).

19. A body according to claim 18, **characterised in that** said first shut-off portion comprises a central plate-shaped portion (20), an annular ridge (22) coaxial to said axis (5) and surrounding said central portion, and a peripheral anchoring edge (15) to a fixed body (2); between said annular ridge (22) and said peripheral anchoring edge (15) at least one through opening (27) being envisaged.
